# EUROPEAN PATENT APPLICATION

(11) **EP 4 580 011 A1**
(43) Date of publication of application: **02.07.2025**
(21) Application number: 24218627.8
(22) Date of filing: 10.12.2024
(51) Int. Cl.: H02K 5/22, H01R 13/04, H02K 11/33, H01R 13/631, H01R 13/641

(54) **DRIVE DEVICE**

(30) Priority: 26.12.2023 JP 2023219830
(71) Applicant: TOYOTA JIDOSHA KABUSHIKI KAISHA, Aichi-ken, 471-8571 (JP)
(72) Inventor: IRAHA, Yumi, Toyota-shi, 471-8571 (JP); AWATA, Hideya, Toyota-shi, 471-8571 (JP); SHIBATA, Ryosuke, Toyota-shi, 471-8571 (JP); TSURUMI, Yukinori, Toyota-shi, 471-8571 (JP); NAKAGAWA, Hideki, Toyota-shi, 471-8571 (JP); ISHIURA, Kazuaki, Toyota-shi, 471-8571 (JP); IRAHA, Taira, Toyota-shi, 471-8571 (JP); NAGAI, Takaya, Toyota-shi, 471-8571 (JP); DEGUCHI, Junichi, Toyota-shi, 471-8571 (JP)
(74) Representative: TBK

(57) **Abstract**

A drive device (10) for a vehicle includes a motor unit (12) including a motor (14) and an inverter unit (20) including an inverter (22). One of the motor unit (12) or the inverter unit (20) is provided with a plurality of male terminals (28a, 28b, 28c, 28d). The other of the motor unit (12) or the inverter unit (20) is provided with a plurality of female terminals (36a, 36b, 36c, 36d). Each of the male terminals (28a, 28b, 28c, 28d) has a columnar shape that extends along the direction of assembly of the inverter unit (20) to the motor unit (12). Each of the female terminals (36a, 36b, 36c, 36d) has a hole (40) into which a corresponding one of the male terminals (28a, 28b, 28c, 28d) is inserted along the assembly direction. At least one of the male terminals (28a, 28b, 28c, 28d) has a longer distance of insertion into the female terminal than that of the other male terminals.

## Description

### BACKGROUND OF THE INVENTION

### 1. Field of the Invention

The technology disclosed herein relates to a drive device, and more particularly to a drive device for a vehicle.

### 2. Description of Related Art

Japanese Unexamined Patent Application Publication No. 2015-062343 (JP 2015-062343 A) describes a connection structure for a drive device for a vehicle. This connection structure includes a terminal provided on a motor unit and a terminal provided on an inverter unit.

### SUMMARY OF THE INVENTION

In general, at least one of the motor unit and the inverter unit is provided with a positioning structure such as a positioning pin, for example. Consequently, the motor unit and the inverter unit are positioned with respect to each other when the two units are assembled to each other, also allowing the terminal of the motor unit and the terminal of the inverter unit to be positioned with respect to each other.

However, there may be a manufacturing error in the position of the terminal of the motor unit and the position of the terminal of the inverter unit. Thus, the terminal of the motor unit and the terminal of the inverter unit may be misaligned when the two units are positioned with respect to each other using the positioning structure. In this case, an unnecessary stress may act on the terminals, terminal blocks that support the terminals, etc. If the positioning structure between the two units is omitted, on the other hand, the work of assembling the two units may be relatively troublesome.

The present disclosure provides a new and useful technology for assembly between a motor unit and an inverter unit in a drive device for a vehicle.

The technology disclosed herein is embodied as a drive device for a vehicle. A first aspect of the present disclosure provides a drive device including a motor unit including a motor and an inverter unit including an inverter. One of the motor unit or the inverter unit is provided with a plurality of male terminals. The other of the motor unit or the inverter unit is provided with a plurality of female terminals. Each of the male terminals has a columnar shape that extends along a direction of assembly of the inverter unit to the motor unit. Each of the female terminals has a hole into which a corresponding one of the male terminals is inserted along the assembly direction. At least one of the male terminals has a longer distance of insertion into the female terminal than that of the other male terminals.

The insertion distance as used herein means the distance by which the male terminal is moved since the insertion of the male terminal into the female terminal is started until such insertion is ended. In other words, the insertion distance is equal to the distance from the distal end of the male terminal to the opening end of the female terminal in the assembly direction (insertion direction) with the male terminal inserted into the female terminal.

In the configuration described above, the motor unit and the inverter unit are electrically and mechanically connected to each other by inserting the male terminals into the respective female terminals. That is, the connection structure with the male terminals and the female terminals also functions as a positioning structure between the motor unit and the inverter unit. In particular, at least one of the male terminals has a longer distance of insertion into the female terminal than that of the other male terminals. With such a configuration, the insertion of at least one male terminal is first started, and the insertion of the other male terminals is thereafter started, into the female terminals. This allows the male terminals and the female terminals to be easily aligned in position when assembling the motor unit and the inverter unit to each other.

In a second aspect, in addition to the first aspect, the at least one of the male terminals may be a reference male terminal that projects in the assembly direction with respect to the other male terminals. With such a configuration, the insertion distance of the reference male terminal can be made greater than the insertion distance of the other male terminals.

In a third aspect, in addition to the first or second aspect, the reference male terminal may have, at a distal end portion that includes at least a distal end, a tapered shape in which a cross-sectional area reduces toward the distal end. With such a configuration, the reference male terminal as the male terminal to be first inserted into the female terminal can be easily aligned with the corresponding female terminal.

In a fourth aspect, in addition to any one of the first to third aspects, the distal end of the reference male terminal may be constituted with a curved surface. With such a configuration, the reference male terminal to be first inserted into the female terminal can be aligned with the female terminal further easily.

In a fifth aspect, in addition to any one of the first to fourth aspects, the reference male terminal may have a smaller clearance from the hole of the female terminal than that of the other male terminals. With such a configuration, the motor unit and the inverter unit are positioned more accurately by inserting the reference male terminal into the corresponding female terminal. At this time, the other male terminals have a greater clearance from the hole of the corresponding female terminals, and thus the other male terminals can be easily inserted into the female terminals.

In a sixth aspect, in addition to any one of the first to fifth aspects, the reference male terminal may have a larger maximum cross-sectional area than that of the other male terminals. With such a configuration, the clearance of the reference male terminal from the hole of the female terminal can be made smaller than the clearance of the other male terminals from the hole of the female terminals.

In a seventh aspect, in addition to any one of the first to sixth aspects, at least one of the female terminals may be a reference female terminal that projects in the assembly direction with respect to the other female terminals. Also with such a configuration, the insertion distance of at least one of the male terminals can be made greater than the insertion distance of the other male terminals.

In an eighth aspect, in addition to any one of the first to seventh aspects, the hole of the reference female terminal may have, at an entrance portion including at least an opening end, a tapered shape in which a cross-sectional area increases toward the opening end. With such a configuration, the reference female terminal as the female terminal into which the male terminal is first inserted can be easily aligned with the corresponding male terminal.

In a ninth aspect, in addition to any one of the first to eighth aspects, the hole of the reference female terminal may have a smaller clearance from the male terminal than that of the holes of the other female terminals. With such a configuration, the motor unit and the inverter unit are positioned more accurately by the reference female terminal receiving the insertion of the corresponding reference male terminal. At this time, the hole of the other female terminals has a greater clearance from the corresponding male terminals, and thus the other male terminals can be easily inserted into the female terminals.

In a tenth aspect, in addition to any one of the first to ninth aspects, the hole of the reference female terminal may have a smaller minimum cross-sectional area than that of the holes of the other female terminals. With such a configuration, the clearance of the reference female terminal can be made smaller than the clearance of the other female terminals.

In an eleventh aspect, in addition to any one of the first to tenth aspects, the male terminals may include at least a first male terminal, a second male terminal, and a third male terminal, and the female terminals may include at least a first female terminal, a second female terminal, and a third female terminal. In this case, a U-phase of the motor and the inverter may be electrically connected by inserting the first male terminal into the first female terminal. A V-phase of the motor and the inverter may be electrically connected by inserting the second male terminal into the second female terminal. A W-phase of the motor and the inverter may be electrically connected by inserting the third male terminal into the third female terminal. With such a configuration, a drive device that includes a three-phase motor and an inverter that drives the three-phase motor can be embodied.

In a twelfth aspect, in addition to the eleventh aspect, the male terminals may further include a fourth male terminal, and the female terminals may further include a fourth female terminal having a hole into which the fourth male terminal is inserted. In this case, the fourth male terminal or the fourth female terminal may be electrically connected to a neutral point of the motor in the motor unit. With such a configuration, the neutral point of the three-phase motor can be electrically connected to the inverter unit in addition to the U-phase, the V-phase, and the W-phase of the three-phase motor.

In a thirteenth aspect, in addition to any one of the first to twelfth aspects, the motor unit may include a motor casing to which either the male terminals or the female terminals are fixed, and the inverter unit may include an inverter casing to which the other of the male terminals or the female terminals are fixed. In this case, a mating surface formed on the motor casing may be aligned with a mating surface formed on the inverter casing with the male terminals inserted into the respective female terminals. With such a configuration, the motor casing and the inverter casing can be positioned with respect to each other without necessarily providing a positioning structure such as a positioning pin.

The technology disclosed herein is also embodied as another drive device for a vehicle. This drive device includes a motor unit including a motor and an inverter unit including an inverter. One of the motor unit or the inverter unit is provided with a plurality of male terminals. The other of the motor unit or the inverter unit is provided with a plurality of female terminals. Each of the male terminals has a columnar shape that extends along a direction of assembly of the inverter unit to the motor unit. Each of the female terminals has a hole into which a corresponding one of the male terminals is inserted along the assembly direction. At least one of the male terminals has a smaller clearance from the hole of the female terminal than that of the other male terminals.

Also in the configuration described above, the motor unit and the inverter unit are electrically and mechanically connected to each other by inserting the male terminals into the respective female terminals. That is, the connection structure with the male terminals and the female terminals also functions as a positioning structure between the motor unit and the inverter unit. In particular, at least one of the male terminals has a smaller clearance from the hole of the female terminals than that of the other male terminals. With such a configuration, the motor unit and the inverter unit are positioned more accurately by inserting at least one male terminal into the female terminal. At this time, the other male terminals have a greater clearance from the hole of the corresponding female terminals, and thus the other male terminals can be easily inserted into the female terminals.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 schematically illustrates the configuration of a vehicle 100 equipped with a drive device 10 according to a first embodiment;
FIG. 2 schematically illustrates the configuration of the drive device 10 according to the first embodiment;
FIG. 3 illustrates the state of the drive device 10 according to the first embodiment before assembly;
FIG. 4 illustrates male terminals 28a to 28d provided on an inverter unit 20 and female terminals 36a to 36d provided in a motor unit 12;
FIG. 5A illustrates the male terminals 28 and the female terminals 36 before assembly according to the first embodiment;
FIG. 5B illustrates the male terminals 28 and the female terminals 36 after assembly according to the first embodiment;
FIG. 6A illustrates the male terminals 28 and the female terminals 36 before assembly according to a second embodiment;
FIG. 6B illustrates the male terminals 28 and the female terminals 36 after assembly according to the second embodiment;
FIG. 7A illustrates the first male terminal 28a according to a modification of the first and second embodiments, in which the first male terminal 28a has a tapered shape at a distal end portion 33;
FIG. 7B illustrates the first male terminal 28a according to a modification of the first and second embodiments, in which the first male terminal 28a has a different tapered shape at the distal end portion 33;
FIG. 7C illustrates the first male terminal 28a according to a modification of the first and second embodiments, in which the first male terminal 28a has a different tapered shape at the distal end portion 33;
FIG. 7D illustrates the first male terminal 28a according to a modification of the first and second embodiments, in which the first male terminal 28a has a different tapered shape at the distal end portion 33;
FIG. 7E illustrates the first male terminal 28a according to a modification of the first and second embodiments, in which a distal end 32 of the first male terminal 28a is constituted with a curved surface;
FIG. 8A illustrates the male terminals 28 and the female terminals 36 before assembly according to a third embodiment;
FIG. 8B illustrates the male terminals 28 and the female terminals 36 after assembly according to the third embodiment;
FIG. 9A illustrates the male terminals 28 and the female terminals 36 before assembly according to a fourth embodiment;
FIG. 9B illustrates the male terminals 28 and the female terminals 36 after assembly according to the fourth embodiment;
FIG. 10A illustrates a hole 40 of the first female terminal 36a according to a modification of the third and fourth embodiments, in which the hole 40 of the first female terminal 36a has a tapered shape at an entrance portion 43;
FIG. 10B illustrates the hole 40 of the first female terminal 36a according to a modification of the third and fourth embodiments, in which the hole 40 of the first female terminal 36a has a different tapered shape at the entrance portion 43;
FIG. 10C illustrates the hole 40 of the first female terminal 36a according to a modification of the third and fourth embodiments, in which the hole 40 of the first female terminal 36a has a different tapered shape at the entrance portion 43;
FIG. 11A illustrates the male terminals 28 and the female terminals 36 before assembly in a modification in which the second male terminal 28b serves as a reference male terminal;
FIG. 11B illustrates the male terminals 28 and the female terminals 36 after assembly in the modification illustrated in FIG. 11A;
FIG. 12A illustrates the male terminals 28 and the female terminals 36 before assembly in a modification in which the second female terminal 36b serves as a reference female terminal;
FIG. 12B illustrates the male terminals 28 and the female terminals 36 after assembly in a modification in which the second female terminal 36b serves as a reference female terminal;
FIG. 13A illustrates the male terminals 28 and the female terminals 36 before assembly according to a fifth embodiment; and
FIG. 13B illustrates the male terminals 28 and the female terminals 36 after assembly according to the fifth embodiment.

### DETAILED DESCRIPTION OF EMBODIMENTS

### First Embodiment

A drive device 10 according to a first embodiment will be described with reference to the drawings. The drive device 10 according to the present embodiment is mounted on a vehicle 100 such as a battery electric vehicle, for example. However, the vehicle 100 is not necessarily limited to a battery electric vehicle, and may be a vehicle including a motor for travel such as a hybrid electric vehicle and a fuel cell electric vehicle. A part or all of the technology described in relation to the present embodiment can be similarly adopted by a vehicle that travels on a track. The vehicle 100 is not limited to one that is driven and operated by a user, and may be one that is remotely operated by an external device or one that travels autonomously.

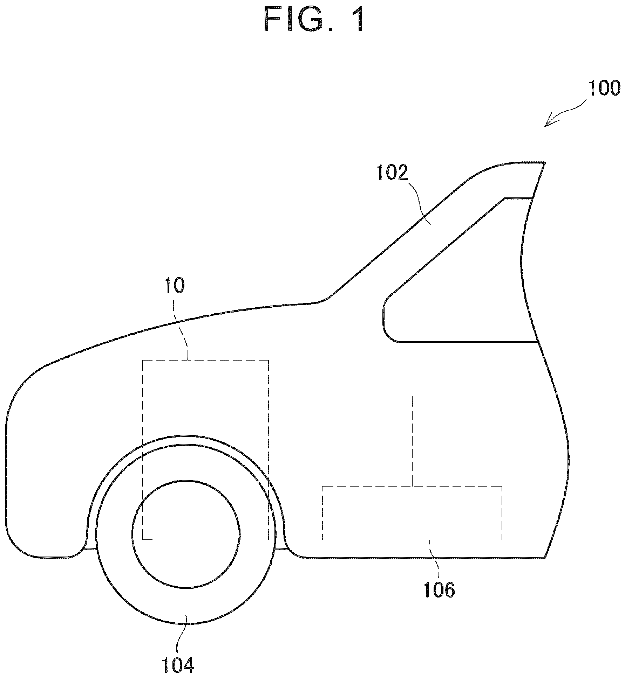

As illustrated in FIG. 1, the vehicle 100 includes a vehicle body 102 and a plurality of wheels 104. The wheels 104 are rotatably attached to the vehicle body 102. The wheels 104 include a pair of front wheels located at a front portion of the vehicle body 102, and a pair of rear wheels located at a rear portion o the vehicle body 102. The front wheels are disposed coaxially with each other. The rear wheels are also disposed coaxially with each other. The number of the wheels 104 is not limited to four. The vehicle body 102 is constituted of metal such as a steel material or an aluminum alloy, although this is not specifically limiting.

As illustrated in FIG. 1, the vehicle 100 further includes a battery 106. The battery 106 includes a plurality of built-in secondary battery cells such as lithium ion battery cells, nickel metal hydride battery cells, or all-solid-state battery cells, for example.

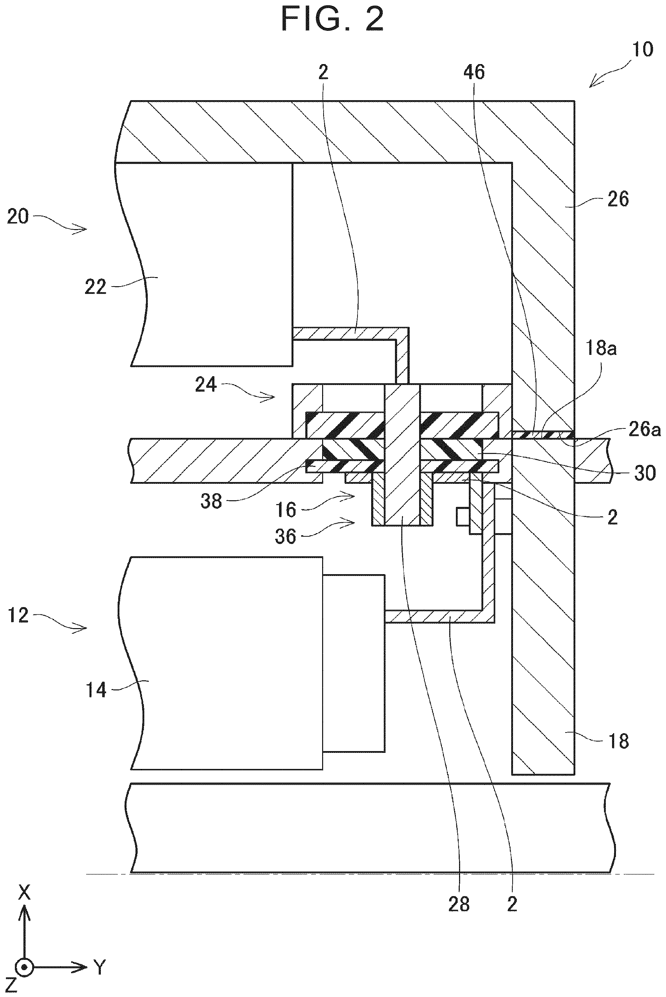

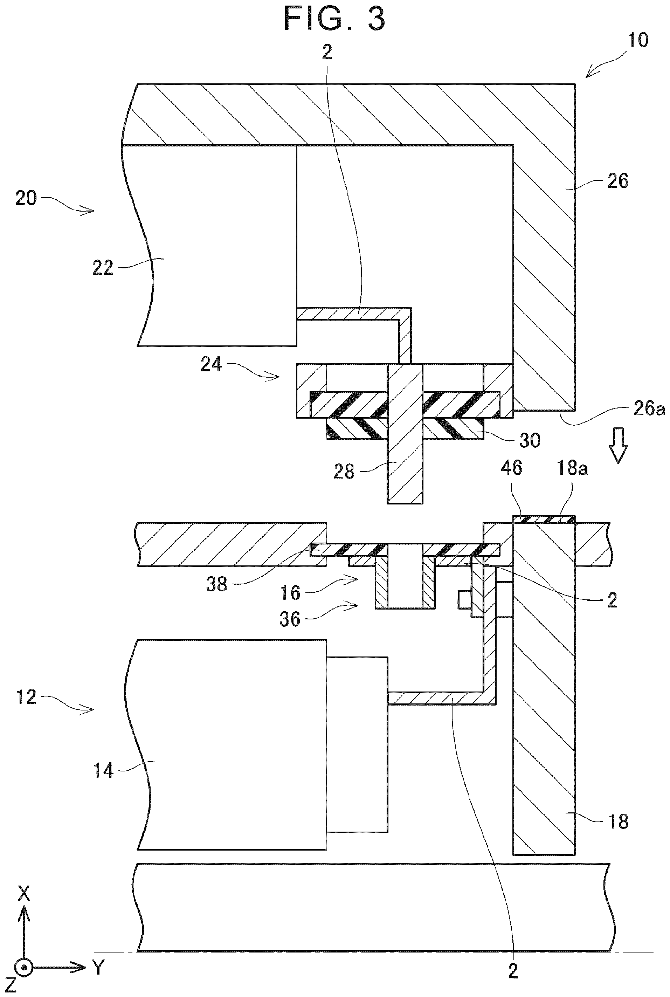

As illustrated in FIGS. 2 and 3, the drive device 10 includes a motor unit 12. The motor unit 12 includes a motor 14, a female terminal unit 16, and a motor casing 18. The motor 14 is a motor for travel that drives the wheels 104 of the vehicle 100, and is a motor driven by three-phase alternating-current power in the present embodiment. By way of example, the motor 14 is electrically connected to the female terminal unit 16 via a bus bar 2. The motor casing 18 is a housing member, and accommodates the motor 14. The female terminal unit 16 is fixed to the motor casing 18. The motor casing 18 is constituted using a conductive material such as aluminum, for example. Although not illustrated, the motor 14 is connected to the wheels 104 via a gear mechanism so that power of the motor 14 driven by electric power from the battery 106 is output to the wheels 104 via the gear mechanism.

As illustrated in FIGS. 2 and 3, the drive device 10 further includes an inverter unit 20. The inverter unit 20 includes an inverter 22, a male terminal unit 24, and an inverter casing 26. The inverter 22 is an electric power converter that converts direct-current power into alternating-current power, and converts direct-current power from the battery 106 into three-phase alternating-current power in the present embodiment. By way of example, the inverter 22 is electrically connected to the male terminal unit 24 via a bus bar 2. The inverter casing 26 is a housing member, and accommodates the inverter 22. The male terminal unit 24 is fixed to the inverter casing 26. The inverter casing 26 is constituted using a conductive material such as aluminum, for example. The inverter 22 may include a direct-current (DC)-DC converter circuit that boosts the voltage of the DC power supplied from the battery 106, although this is not specifically limiting.

Herein, the X direction, the Y direction, and the Z direction are defined with reference to the direction of assembly of the inverter unit 20 to the motor unit 12. The X direction is a direction parallel to the direction in which the inverter unit 20 is assembled to the motor unit 12. The Y direction and the Z direction are perpendicular to each other, and are each perpendicular to the X direction.

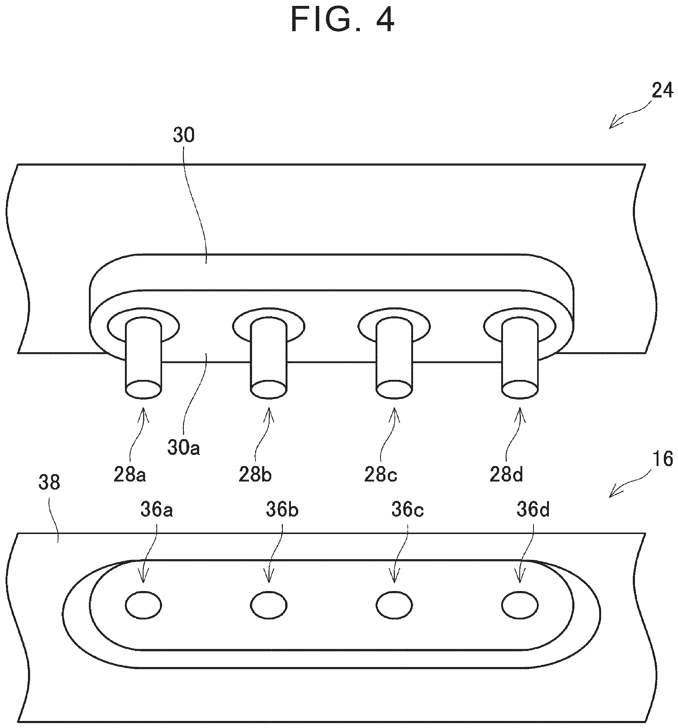

As illustrated in FIGS. 2 to 5B, the male terminal unit 24 includes a plurality of male terminals 28a to 28d and a terminal block 30. The male terminals 28a to 28d are terminals for electrical connection. The male terminals 28a to 28d are fixed to the inverter casing 26 via the terminal block 30. The male terminals 28a to 28d are exposed on a lower surface (i.e., a surface in the -X direction) 30a of the terminal block 30. The lower surface of the terminal block 30 may not be exposed. The male terminals 28a to 28d are electrically connected to the inverter 22 via the bus bar 2. The male terminals 28a to 28d include a first male terminal 28a, a second male terminal 28b, a third male terminal 28c, and a fourth male terminal 28d. The male terminals 28a to 28d are sequentially disposed along the Z-axis. That is, the first male terminal 28a, the second male terminal 28b, the third male terminal 28c, and the fourth male terminal 28d are sequentially disposed from the +Z direction to the -Z direction. The terminal block 30 is constituted of an insulating material such as a resin. Hereinafter, the male terminals 28a to 28d are occasionally simply referred to as "male terminals 28" with no index alphabet added when it is not necessary to distinguish the male terminals 28a to 28d.

As illustrated in FIGS. 2 to 5B, the male terminals 28 have a columnar shape that extends along the X direction. That is, the male terminals 28 have a columnar shape that extends along the direction of assembly of the inverter unit 20 to the motor unit 12. The male terminals 28 each include a distal end 32 and an outer side surface 34 that extends along the X direction from the distal end 32. The male terminals 28 are constituted using a metal material such as copper or aluminum. In the present embodiment, by way of example, the columnar shape of the male terminals 28 is a circular column shape with a circular cross-sectional shape taken perpendicularly to the longitudinal direction (X direction) of the first male terminal 28a.

As illustrated in FIGS. 2 to 5B, the female terminal unit 16 includes a plurality of female terminals 36a to 36d and a terminal block 38. The female terminals 36a to 36d are terminals for electrical connection. The female terminals 36a to 36d are fixed to the motor casing 18 via the terminal block 38. The female terminals 36a to 36d include a first female terminal 36a, a second female terminal 36b, a third female terminal 36c, and a fourth female terminal 36d. The female terminals 36a to 36d are fixed to the terminal block 38 along the Z-axis. That is, the first female terminal 36a, the second female terminal 36b, the third female terminal 36c, and the fourth female terminal 36d are sequentially disposed from the +Z direction to the -Z direction. The terminal block 38 is constituted of an insulating material such as a resin.

As discussed earlier, the motor 14 according to the present embodiment is a motor driven by three-phase alternating-current power. The first female terminal 36a is electrically connected to the U-phase of the motor 14 via the bus bar 2. The second female terminal 36b is electrically connected to the V-phase of the motor 14 via the bus bar 2. The third female terminal 36c is electrically connected to the W-phase of the motor 14 via the bus bar 2. The fourth female terminal 36d is electrically connected to the neutral point of the motor 14 via the bus bar 2. Hereinafter, the female terminals 36a to 36d are occasionally simply referred to as "female terminals 36" with no index alphabet added when it is not necessary to distinguish the female terminals 36a to 36d.

As illustrated in FIGS. 2 to 5B, the female terminals 36 each have a hole 40 into which one corresponding male terminal 28 is inserted. The hole 40 includes an opening end 42 that receives the male terminal 28, and an inner side surface 44 that extends along the X direction from the opening end 42. That is, the depth direction of the hole 40 coincides with the X direction. The inner side surface 44 of the female terminal 36 faces the outer side surface 34 of the male terminal 28. In the present embodiment, the clearance between the outer side surface 34 of the male terminal 28 and the inner side surface 44 of the female terminal 36 (i.e., the clearance of the male terminal 28 from the hole 40 of the female terminal 36) is zero. The female terminals 36 are constituted using a metal material such as copper or aluminum.

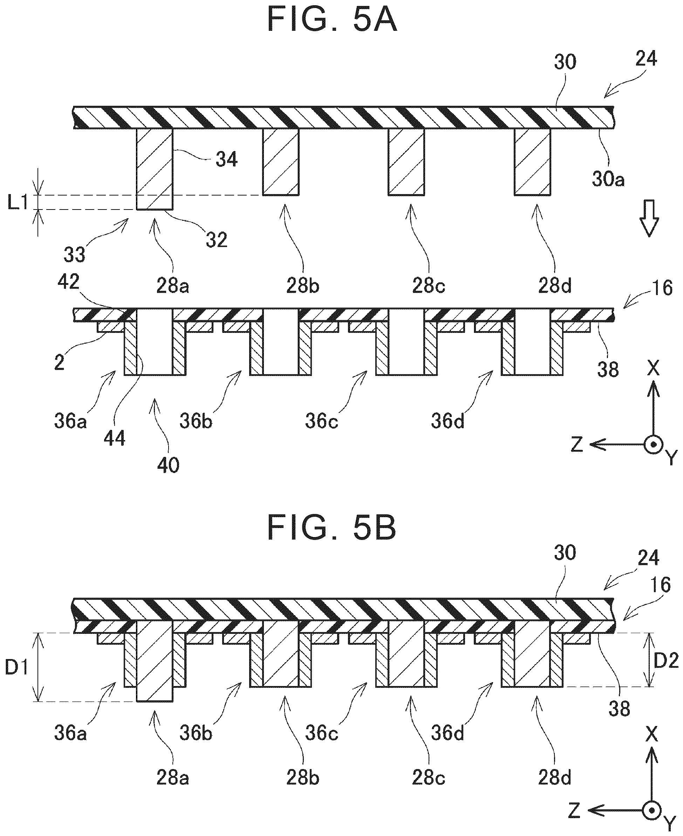

As illustrated in FIGS. 5A and 5B, the first male terminal 28a projects with respect to the other male terminals 28b to 28d. In the present embodiment, the position of the distal end 32 of the first male terminal 28a in the X direction projects by L1 in the -X direction with respect to the position of the distal ends 32 of the other male terminals 28b to 28d in the X direction. On the contrary, the positions of the opening ends 42 of the female terminals 36 in the X direction are equal.

In the drive device 10 according to the present embodiment configured as described above, the motor unit 12 and the inverter unit 20 are electrically connected to each other when the male terminals 28 are inserted into the corresponding female terminals 36. More particularly, the U-phase of the motor 14 and the inverter 22 are electrically connected to each other by inserting the first male terminal 28a into the first female terminal 36a. The V-phase of the motor 14 and the inverter 22 are electrically connected to each other by inserting the second male terminal 28b into the second female terminal 36b. The W-phase of the motor 14 and the inverter 22 are electrically connected to each other by inserting the third male terminal 28c into the third female terminal 36c. As discussed earlier, the fourth female terminal 36d is electrically connected to the neutral point of the motor 14. Thus, the motor 14 can be use as a step-up and step-down circuit (so-called neutral point charge) when charging the vehicle 100. In other embodiments, the fourth male terminal 28d may be electrically connected to the neutral point of the motor 14, in place of the fourth female terminal 36d.

In the drive device 10 according to the present embodiment, in addition, the motor unit 12 and the inverter unit 20 are mechanically connected to each other as well by inserting the male terminals 28 into the corresponding female terminals 36. That is, the connection structure with the male terminals 28 and the female terminals 36 also functions as a positioning structure between the motor unit 12 and the inverter unit 20. In particular, a distance D1 of insertion of the first male terminal 28a into the female terminal 36 is greater than a distance D2 of insertion of the other male terminals 28b to 28d into the female terminals 36. The insertion distance D1, D2 as used herein means the distance by which the male terminal 28 is moved since the insertion of the male terminal 28 into the female terminal 36 is started until such insertion is completed. In other words, the insertion distance D1, D2 is equal to the distance in the assembly direction (insertion direction) from the distal end 32 of the male terminal 28 to the opening end 42 of the female terminal 36 with the male terminal 28 inserted into the female terminal 36. With such a configuration, the insertion of the first male terminal 28a is first started, and the insertion of the other male terminals 28b to 28d is thereafter started, into the female terminals 36a to 36d. This allows the male terminals 28b to 28d and the female terminals 36b to 36d to be easily aligned in position when assembling the motor unit 12 and the inverter unit 20 to each other. The first male terminal 28a according to the present embodiment is an example of the reference male terminal according to the present invention.

In the drive device 10 according to the present embodiment, by way of example, a mating surface 18a is formed on the motor casing 18, and a mating surface 26a is formed on the inverter casing 26 as well, as illustrated in FIGS. 2 and 3. When the male terminals 28 are inserted into the corresponding female terminals 36, the mating surface 18a formed on the motor casing 18 is aligned with the mating surface 26a formed on the inverter casing 26. With such a configuration, the motor casing 18 and the inverter casing 26 can be positioned with respect to each other without necessarily providing a positioning structure such as a positioning pin.

In the embodiment described above, a seal member 46 is provided on the mating surface 18a of the motor casing 18. This ensures seal between the mating surface 18a of the motor casing 18 and the mating surface 26a of the inverter casing 26 in the drive device 10 according to the embodiment.

### Second Embodiment

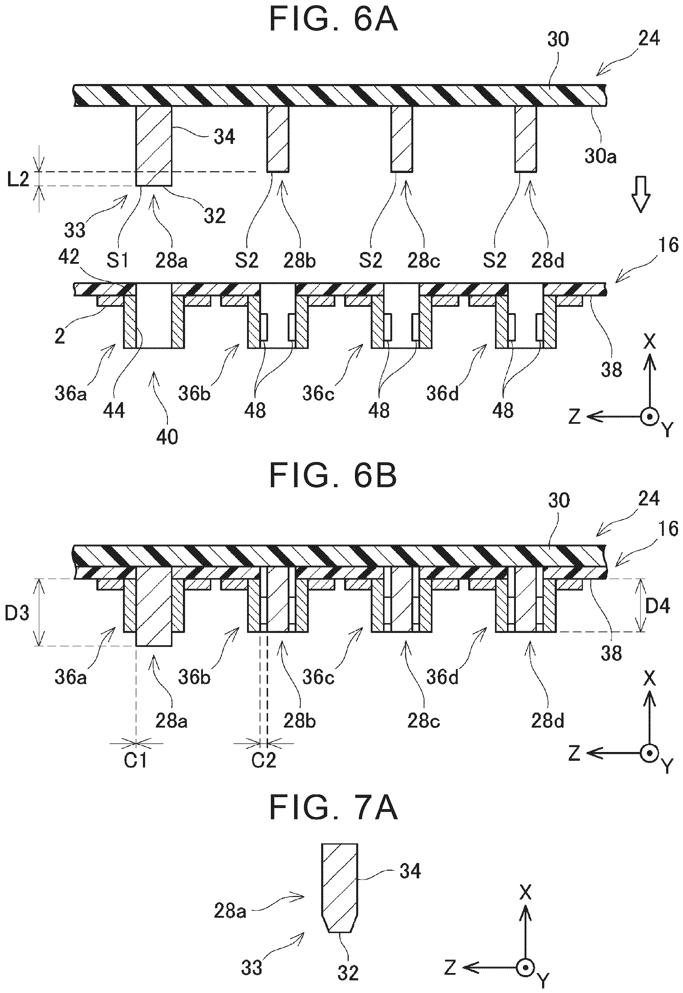

Next, a drive device according to a second embodiment will be described with reference to FIGS. 6A and 6B. In the second embodiment, the clearance of the male terminal 28 from the hole 40 of the female terminal 36 has been changed, as compared with the first embodiment. More particularly, in the second embodiment, a clearance C1 of the first male terminal 28a from the hole 40 of the female terminal 36 is smaller than a clearance C2 of the other male terminals 28b to 28d from the holes 40 of the female terminals 36. In the present embodiment, the clearance C1 is zero. In this case, by way of example, the diameter of the first male terminal 28a is preferably larger than the diameter of the other male terminals 28b to 28d, as illustrated in FIGS. 6A and 6B. In other words, the area of the cross section of the first male terminal 28a taken perpendicularly to the longitudinal direction (X direction) is preferably larger than the area of the cross section of the other male terminals 28b to 28d taken perpendicularly to the longitudinal direction (X direction). This makes a maximum cross-sectional area S 1 of the first male terminal 28a larger than a maximum cross-sectional area S2 of the other male terminals 28b to 28d, providing a difference between the clearances C1, C2. Here, the position of the distal end 32 of the first male terminal 28a in the X direction projects by L2 in the -X direction with respect to the position of the distal ends 32 of the other male terminals 28b to 28d in the X direction, and a distance D3 of insertion of the first male terminal 28a into the female terminal 36 is greater than a distance D4 of insertion of the other male terminals 28b to 28d into the female terminals 36.

With such a configuration, the motor unit 12 and the inverter unit 20 are positioned more accurately by inserting the first male terminal 28a into the corresponding first female terminal 36a. At this time, the clearance C2 of the other male terminals 28b to 28d from the holes 40 of the corresponding female terminals 36b to 36d is large, and thus the other male terminals 28b to 28d can be easily inserted into the female terminals 36b to 36d. Contact point members 48 are provided on the inner side surfaces 44 of the female terminals 36b to 36d corresponding to the other male terminals 28b to 28d, although this is not specifically limiting. This ensures electrical connection even if the other male terminals 28b to 28d have a relatively large clearance C2 from the holes 40 of the female terminals 36b to 36d.

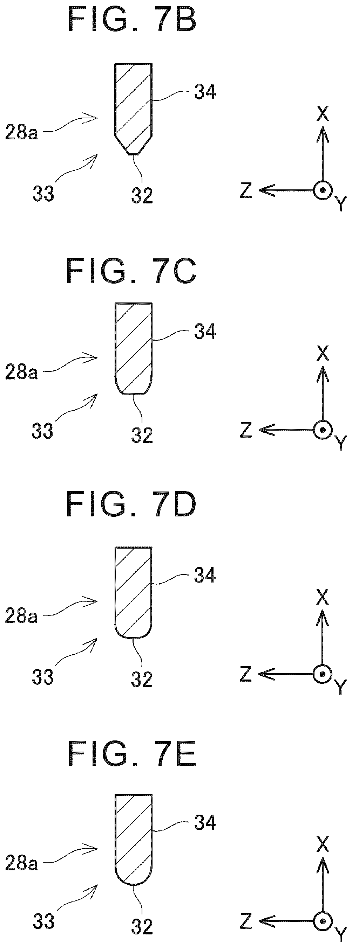

In the first and second embodiments described above, the first male terminal 28a has the same cross-sectional shape from the distal end 32 to the base end. In other embodiments, however, the first male terminal 28a may have a tapered shape in which the cross-sectional area reduces toward the distal end 32 at a distal end portion 33 including the distal end 32, as illustrated in FIGS. 7A to 7D. In this case, the dimension of the distal end 32 of the first male terminal 28a in the Z direction can be changed as appropriate. The proportion in which the cross-sectional area reduces may be constant as illustrated in FIGS. 7A and 7B, or may be varied as illustrated in FIGS. 7C and 7D. With these configurations, the reference male terminal as the first male terminal 28a to be first inserted into the female terminal 36 can be easily aligned with the corresponding first female terminal 36a.

Alternatively, in still another embodiment, the distal end 32 of the first male terminal 28a may be constituted with a curved surface, as illustrated in FIG. 7E. With this configuration, the reference male terminal as the first male terminal 28a to be first inserted into the female terminal 36 can be aligned further easily with the corresponding first female terminal 36a.

### Third Embodiment

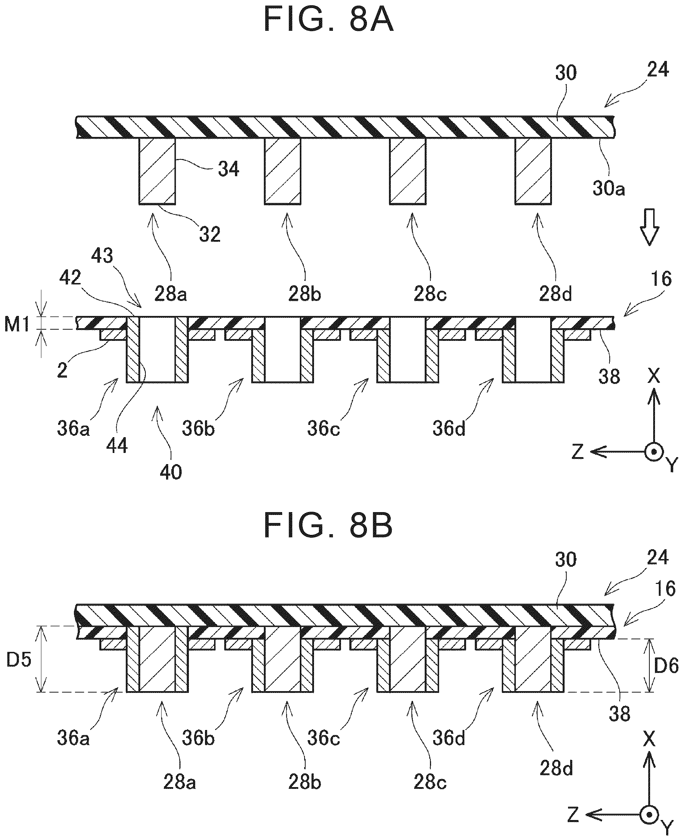

Next, a drive device according to a third embodiment will be described with reference to FIGS. 8A and 8B. In the third embodiment, a reference female terminal is adopted in place of the reference male terminal according to the first and second embodiments. In the third embodiment, as illustrated in FIGS. 8A and 8B, the first female terminal 36a projects with respect to the other female terminals 36b to 36d. More particularly, the position of the opening end 42 of the first female terminal 36a in the X direction projects by M1 in the +X direction with respect to the position of the opening ends 42 of the other female terminals 36b to 36d in the X direction. On the contrary, the positions of the distal ends 32 of the male terminals 28 in the X direction are equal. Therefore, a distance D5 of insertion of the first male terminal 28a into the female terminal 36 is greater than a distance D6 of insertion of the other male terminals 28b to 28d into the female terminals 36. In the present embodiment, the clearance between the outer side surface 34 of the male terminal 28 and the inner side surface 44 of the female terminal 36 is zero.

Also with such a configuration, the insertion of the first male terminal 28a is first started, and the insertion of the other male terminals 28b to 28d is thereafter started, into the female terminals 36a to 36d. This allows the male terminals 28b to 28d and the female terminals 36b to 36d to be easily aligned in position when assembling the motor unit 12 and the inverter unit 20 to each other. The first female terminal 36a according to the present embodiment is an example of the reference female terminal according to the present invention.

### Fourth Embodiment

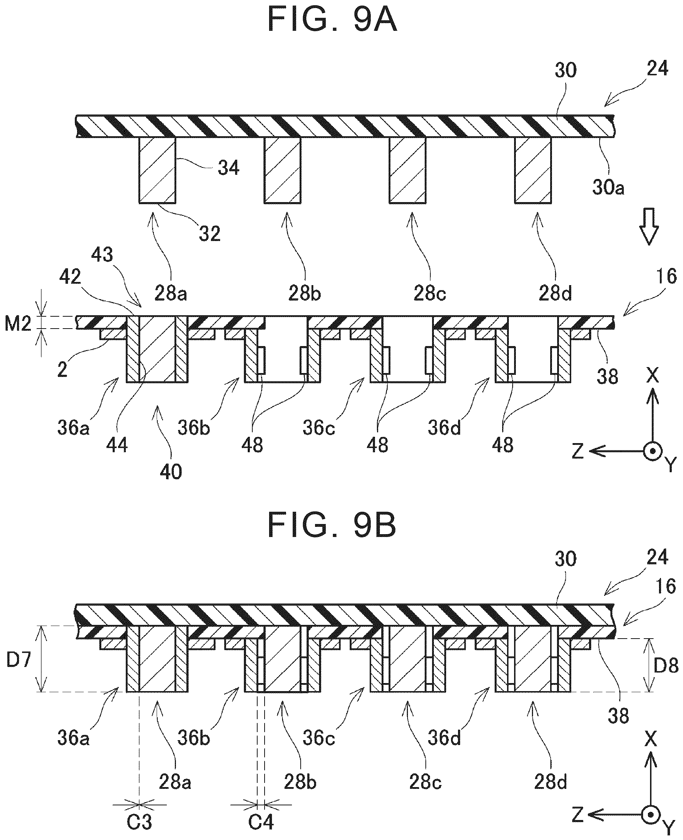

Next, a drive device according to a fourth embodiment will be described with reference to FIGS. 9A and 9B. In the fourth embodiment, the clearance of the male terminal 28 from the hole 40 of the female terminal 36 has been changed, as compared with the third embodiment. More particularly, in the fourth embodiment, a clearance C3 of the first male terminal 28a from the hole 40 of the female terminal 36 is smaller than a clearance C4 of the other male terminals 28b to 28d from the holes 40 of the female terminals 36. In the present embodiment, the clearance C3 is zero. In this case, by way of example, the diameter of the hole 40 of the first female terminal 36a is preferably smaller than the diameter of the holes 40 of the other female terminals 36b to 36d, as illustrated in FIGS. 9A and 9B. In other words, the area of the cross section of the hole 40 of the first female terminal 36a taken perpendicularly to the depth direction (X direction) is preferably smaller than the area of the cross section of the holes 40 of the other female terminals 36b to 36d taken perpendicularly to the depth direction (X direction). This makes a minimum cross-sectional area A1 of the hole 40 of the first female terminal 36a smaller than a minimum cross-sectional area A2 of the holes 40 of the other female terminals 36b to 36d, providing a difference between the clearances C3, C4. Here, the position of the opening end 42 of the first female terminal 36a in the X direction projects by M2 in the +X direction with respect to the position of the opening ends 42 of the other female terminals 36b to 36d in the X direction, and a distance D7 of insertion of the first male terminal 28a into the female terminal 36 is greater than a distance D8 of insertion of the other male terminals 28b to 28d into the female terminals 36.

With such a configuration, the motor unit 12 and the inverter unit 20 are positioned more accurately by the first female terminal 36a receiving the insertion of the corresponding first male terminal 28a. At this time, the clearance C4 of the holes 40 of the other female terminals 36b to 36d from the corresponding male terminals 28b to 28d is large, and thus the other male terminals 28b to 28d can be easily inserted into the female terminals 36b to 36d. Contact point members 48 are provided on the inner side surfaces 44 of the female terminals 36b to 36d corresponding to the other male terminals 28b to 28d, although this is not specifically limiting. This ensures electrical connection even if the other male terminals 28b to 28d have a relatively large clearance C4 from the holes 40 of the female terminals 36b to 36d.

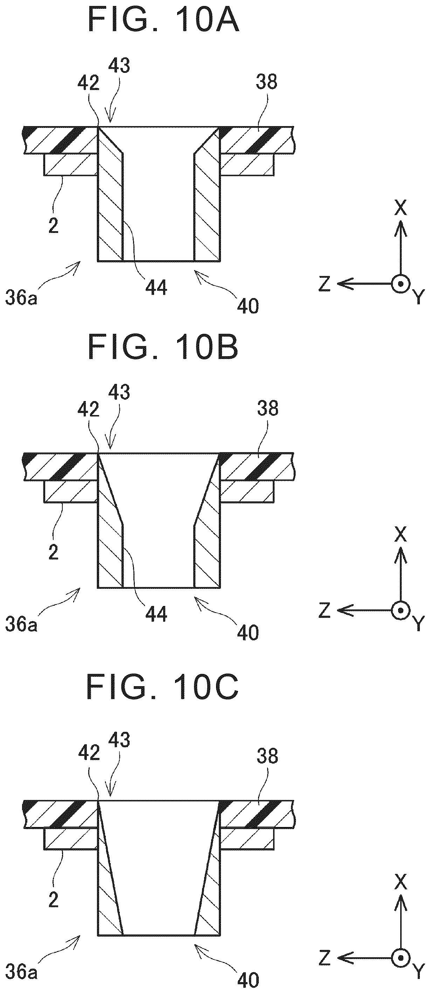

In the third and fourth embodiments described above, the hole 40 of the first female terminal 36a has the same cross-sectional shape from the opening end 42 to the other end. In other embodiments, however, the hole 40 of the first female terminal 36a may have a tapered shape in which the cross-sectional area increases toward the opening end 42 at the entrance portion 43 including the opening end 42, as illustrated in FIGS. 10A to 10C. In this case, the range in which the cross-sectional area of the hole 40 varies in the depth direction (i.e., X direction) is not specifically limited. For example, the cross-sectional area of the hole 40 may vary in a part of the range in the depth direction as illustrated in FIGS. 10A and 10B, or the cross-sectional area of the hole 40 may vary over the entire range in the depth direction as illustrated in FIG. 10C. With these configurations, the reference female terminal as the first female terminal 36a, to which the male terminal 28 is first inserted, can be easily aligned with the corresponding first male terminal 28a.

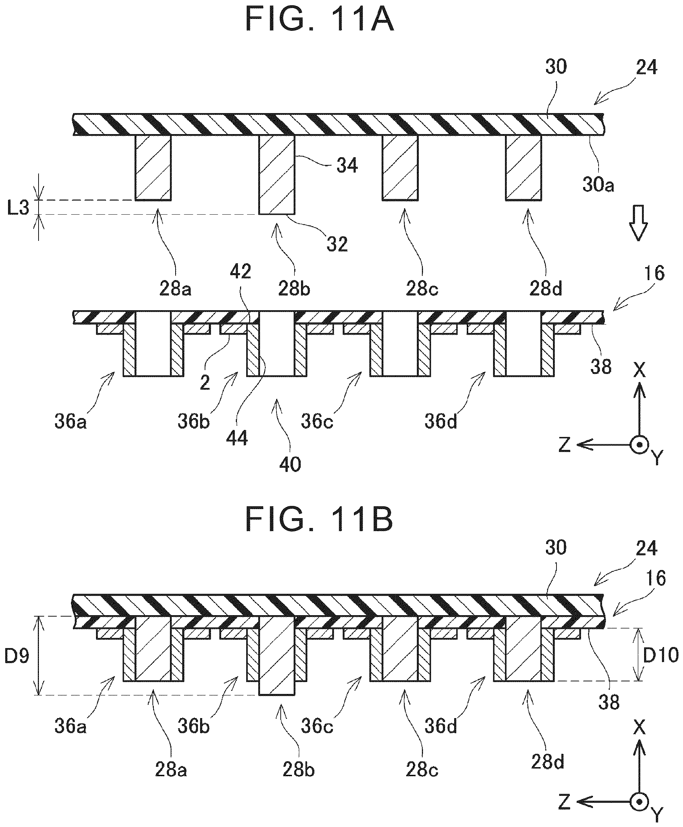

In the first and second embodiments described above, the reference male terminal is the first male terminal 28a located on the leftmost side (+Z direction side), among the male terminals 28. With such a configuration, the first male terminal 28a located at an end portion, among the male terminals 28, is initially inserted into the female terminal 36, and therefore the motor casing 18 and the inverter casing 26 can be easily positioned. However, the position of the reference male terminal is not specifically limited. For example, the position in the X direction of the distal end 32 of the second male terminal 28b located at an intermediate portion, among the male terminals 28, may project by L3 in the -X direction with respect to the position in the X direction of the distal ends 32 of the other male terminals 28a, 28c, and 28d, as illustrated in FIGS. 11A and 11B. In this case, a distance D9 of insertion of the second male terminal 28b is greater than a distance D10 of insertion of the other male terminals 28a, 28c, and 28d, and the second male terminal 28b serves as the reference male terminal. With such a configuration, the second male terminal 28b located at an intermediate portion, among the male terminals 28, is initially inserted into the female terminal 36, and therefore misalignment can be suppressed in the connection structure with the male terminals 28 and the female terminals 36.

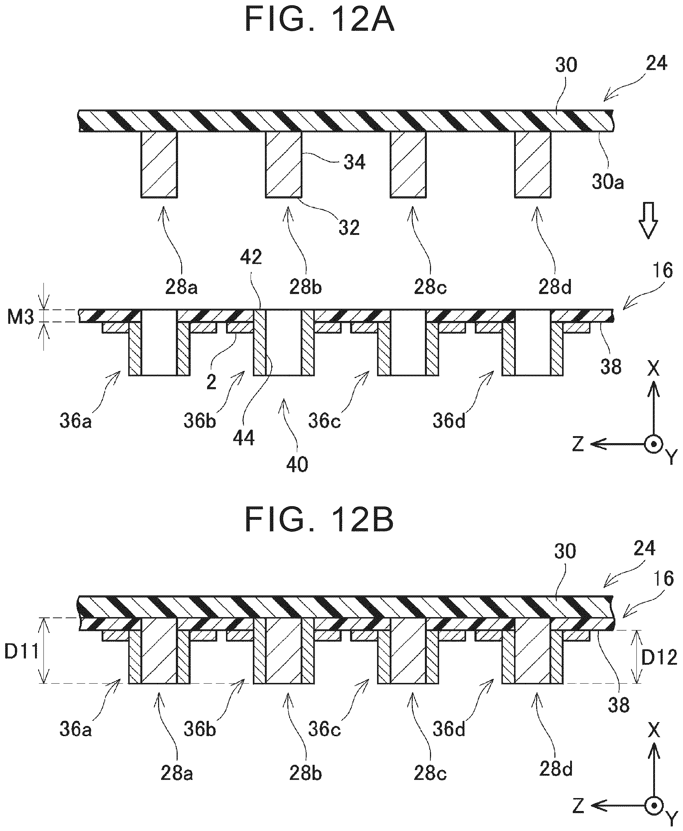

Similarly, while the reference female terminal is the first female terminal 36a located on the leftmost side (+Z direction side), among the female terminals 36, in the third and fourth embodiments described above, the position of the reference female terminal is also not specifically limited. For example, the position of in the X direction of the opening end 42 of the second female terminal 36b located at an intermediate portion, among the female terminals 36, may project by M3 in the +X direction with respect to the position in the X direction of the opening ends 42 of the other female terminals 36a, 36c, and 36d, as illustrated in FIGS. 12A and 12B. In this case, an insertion distance D11 of the second male terminal 28b is greater than an insertion distance D12 of the other male terminals 28a, 28c, and 28d. Here, the second female terminal 36b into which the male terminal 28 is first inserted serves as the reference female terminal.

### Fifth Embodiment

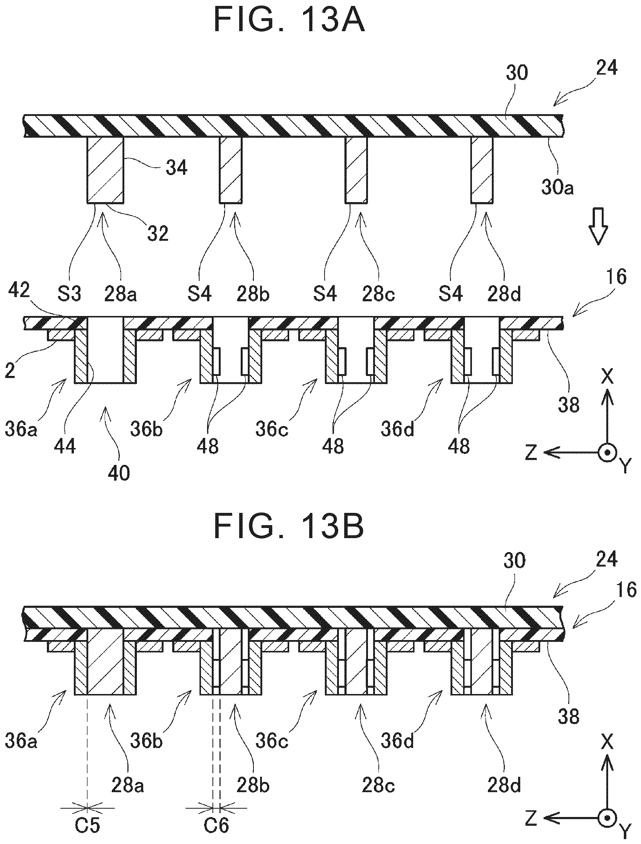

Next, a drive device according to a fifth embodiment will be described with reference to FIGS. 13A and 13B. In the fifth embodiment, the positions of the distal ends 32 of the male terminals 28 in the X direction are made equal, as compared with the second embodiment. Therefore, in the fifth embodiment, a clearance C5 of the first male terminal 28a from the hole 40 of the female terminal 36 is smaller than a clearance C6 of the other male terminals 28b to 28d from the holes 40 of the female terminals 36. In the present embodiment, the clearance C5 is zero. In this case, by way of example, the diameter of the first male terminal 28a is preferably larger than the diameter of the other male terminals 28b to 28d, as illustrated in FIGS. 13A and 13B. In other words, the area of the cross section of the first male terminal 28a taken perpendicularly to the longitudinal direction (X direction) is preferably larger than the area of the cross section of the other male terminals 28b to 28d taken perpendicularly to the longitudinal direction (X direction). This makes a maximum cross-sectional area S3 of the first male terminal 28a larger than a maximum cross-sectional area S4 of the other male terminals 28b to 28d, providing a difference between the clearances C5, C6.

Also with such a configuration, the motor unit 12 and the inverter unit 20 are electrically and mechanically connected to each other by inserting the male terminals 28 into the respective female terminals 36. That is, the connection structure with the male terminals 28 and the female terminals 36 also functions as the positioning structure between the motor unit 12 and the inverter unit 20. In particular, the clearance C5 of the first male terminal 28a from the hole 40 of the female terminal 36a is small, and thus the motor unit 12 and the inverter unit 20 are positioned more accurately by inserting the first male terminal 28a into the first female terminal 36a. At this time, the clearance C6 of the other male terminals 28b to 28d from the holes 40 of the corresponding female terminals 36b to 36d is large, and thus the other male terminals 28b to 28d can be easily inserted into the female terminals 36b to 36d. Contact point members 48 are provided in the holes 40 of the female terminals 36b to 36d corresponding to the other male terminals 28b to 28d, although this is not specifically limiting. This ensures electrical connection even if the other male terminals 28b to 28d have a relatively large clearance C6 from the holes 40 of the female terminals 36b to 36d.

While several specific examples have been described in detail above, these are merely exemplary, and are not intended to limit the scope of the claims. The technology described in the claims encompasses various modifications and alterations of the specific examples exemplified above. The technical elements described herein or illustrated in the drawings exhibit technical utility alone or in combination.

## Claims

1. A drive device (10) for a vehicle, comprising:
a motor unit (12) that includes a motor (14); and
an inverter unit (20) that includes an inverter (22), wherein
one of the motor unit (12) or the inverter unit (20) is provided with a plurality of male terminals (28a, 28b, 28c, 28d),
the other of the motor unit (12) or the inverter unit (20) is provided with a plurality of female terminals (36a, 36b, 36c, 36d),
each of the male terminals (28a, 28b, 28c, 28d) has a columnar shape that extends along a direction of assembly of the inverter unit (20) to the motor unit (12),
each of the female terminals (36a, 36b, 36c, 36d) has a hole (40) into which a corresponding one of the male terminals (28a, 28b, 28c, 28d) is inserted along the assembly direction, and
at least one of the male terminals (28a, 28b, 28c, 28d) has a longer distance of insertion into the female terminal than that of the other male terminals.

2. The drive device (10) according to claim 1, wherein the at least one of the male terminals (28a, 28b, 28c, 28d) is a reference male terminal that projects in the assembly direction with respect to the other male terminals.

3. The drive device (10) according to claim 2, wherein the reference male terminal has, at a distal end portion (33) that includes at least a distal end (32), a tapered shape in which a cross-sectional area reduces toward the distal end (32).

4. The drive device (10) according to claim 3, wherein the distal end (32) of the reference male terminal is constituted with a curved surface.

5. The drive device (10) according to claim 2, wherein the reference male terminal has a smaller clearance from the hole (40) of the female terminal than that of the other male terminals.

6. The drive device (10) according to claim 5, wherein the reference male terminal has a larger maximum cross-sectional area than that of the other male terminals.

7. The drive device (10) according to claim 1, wherein at least one of the female terminals (36a, 36b, 36c, 36d) is a reference female terminal that projects in the assembly direction with respect to the other female terminals.

8. The drive device (10) according to claim 7, wherein the hole (40) of the reference female terminal has, at an entrance portion (43) including at least an opening end (42), a tapered shape in which a cross-sectional area increases toward the opening end (42).

9. The drive device (10) according to claim 7, wherein the hole (40) of the reference female terminal has a smaller clearance from the male terminal than that of the holes (40) of the other female terminals.

10. The drive device (10) according to claim 9, wherein the hole (40) of the reference female terminal has a smaller minimum cross-sectional area than that of the holes (40) of the other female terminals.

11. The drive device (10) according to claim 1, wherein:
the male terminals (28a, 28b, 28c, 28d) include at least a first male terminal (28a), a second male terminal (28b), and a third male terminal (28c);
the female terminals (36a, 36b, 36c, 36d) include at least a first female terminal (36a), a second female terminal (36b), and a third female terminal (36c);
a U-phase of the motor (14) and the inverter (22) are electrically connected by inserting the first male terminal (28a) into the first female terminal (36a);
a V-phase of the motor (14) and the inverter (22) are electrically connected by inserting the second male terminal (28b) into the second female terminal (36b); and
a W-phase of the motor (14) and the inverter (22) are electrically connected by inserting the third male terminal (28c) into the third female terminal (36c).

12. The drive device (10) according to claim 11, wherein:
the male terminals (28a, 28b, 28c, 28d) further include a fourth male terminal (28d);
the female terminals (36a, 36b, 36c, 36d) further include a fourth female terminal (36d) into which the fourth male terminal (28d) is inserted; and
the fourth male terminal (28d) or the fourth female terminal (36d) is electrically connected to a neutral point of the motor (14) in the motor unit (12).

13. The drive device (10) according to claim 1, wherein:
the motor unit (12) includes a motor casing (18) to which either the male terminals (28a, 28b, 28c, 28d) or the female terminals (36a, 36b, 36c, 36d) are fixed;
the inverter unit (20) includes an inverter casing (26) to which the other of the male terminals (28a, 28b, 28c, 28d) or the female terminals (36a, 36b, 36c, 36d) are fixed; and
a mating surface formed on the motor casing (18) is aligned with a mating surface formed on the inverter casing (26) with the male terminals (28a, 28b, 28c, 28d) inserted into the respective female terminals (36a, 36b, 36c, 36d).

14. A drive device (10) for a vehicle, comprising:
a motor unit (12) that includes a motor (14); and
an inverter unit (20) that includes an inverter (22), wherein
one of the motor unit (12) or the inverter unit (20) is provided with a plurality of male terminals (28a, 28b, 28c, 28d),
the other of the motor unit (12) or the inverter unit (20) is provided with a plurality of female terminals (36a, 36b, 36c, 36d),
each of the male terminals (28a, 28b, 28c, 28d) has a columnar shape that extends along a direction of assembly of the inverter unit (20) to the motor unit (12),
each of the female terminals (36a, 36b, 36c, 36d) has a hole (40) into which a corresponding one of the male terminals (28a, 28b, 28c, 28d) is inserted along the assembly direction, and
at least one of the male terminals (28a, 28b, 28c, 28d) has a smaller clearance from the hole (40) of the female terminal than that of the other male terminals.
